Europäisches Patentamt

(19) **European Patent Office**

**Office européen des brevets**

(11) Veröffentlichungsnummer: **0 010 663**
**B2**

(12) # NEUE EUROPÄISCHE PATENTSCHRIFT

(45) Veröffentlichungstag der neuen Patentschrift:
15.01.86

(51) Int. Cl.⁴: **B 29 C 35/02**, B 29 C 35/14,
H 05 B 6/68

(21) Anmeldenummer: 79103917.5

(22) Anmeldetag: 12.10.79

(54) **Vorrichtung zum Erwärmen von Kautschukerzeugnissen mit UHF-Energie.**

(30) Priorität: 26.10.78 DE 2846610

(43) Veröffentlichungstag der Anmeldung:
14.05.80 Patentblatt 80/10

(45) Bekanntmachung des Hinweises auf die Patenterteilung:
25.08.82 Patentblatt 82/34

(45) Bekanntmachung des Hinweises auf die Entscheidung
über den Einspruch:
15.01.86 Patentblatt 86/3

(84) Benannte Vertragsstaaten:
AT CH FR GB IT NL SE

(56) Entgegenhaltungen:
DE-A-2 109 461
DE-C-1 221 348
FR-A-2 144 350
FR-A-2 362 551
GB-A-650 337
GB-A-1 159 279
GB-A-1 400 895
US-A-3 557 334
US-A-3 564 187

"Elektrotechnik und Maschinenbau", 1976, Heft 9,
Seiten 371-378
"Taschenbuch der Hochfrequenztechnik", Meinke
und Gundlach, 1968, Seiten 420-421

(73) Patentinhaber: **Paul Troester Maschinenfabrik, Am
Brabrinke 2-4, D-3000 Hannover 89 (DE)**

(72) Erfinder: **Focht, Harry, Am Sportfeld 144, D-3005
Wilkenburg (DE)**

(74) Vertreter: **Junius, Walther, Dr., Wolfstrasse 24,
D-3000 Hannover 81 (DE)**

EP 0 010 663 B2

## Beschreibung

Die Erfindung betrifft eine Vorrichtung zum Erwärmen von Kautschukerzeugnissen, insbesondere in Strangform, zum Zwecke der Vulkanisation mit UHF-Energie, bestehend aus mindestens einer Resonatorkammer, in der sich das zu erwärmende Produkt befindet, einem UHF-Generator und einem von diesem zur Resonator kammer führenden Wellenleiter, der eine Verzweigung aufweist, deren Zweige jeweils an die Resonatorkammer angekoppelt sind und an ihrem Ende jeweils eine Abstimmvorrichtung aufweisen.

Eine derartige Vorrichtung ist aus der US-A-3 564 187 bekanntgeworden. Diese Vorrichtung kann zur Herstellung von Strangprofilen aus Gummi benutzt werden

In der Technik werden immer kompliziertere Strangprofile aus Gummi, insbesondere Moosgummi, benötigt. Diese dienen z. B. als Dichtungen für Türen und Fenster im Bauwesen, in der Automobilindustrie, im Kühlschrankbau und in vielen anderen Industriezweigen. Diese Profile haben nicht nur eine komplizierte Außenform sondern oft darüber hinaus in ihrem Inneren Hohlräume und Kammern, damit es im Betrieb möglich ist, daß sich diese Profilstränge auf ein sehr enges Volumen zusammendrücken lassen, wobei die Profile selbst in ihrem Querschnitt of eine winkelförmige oder wellenförmige Form anzunehmen haben und so gestaltet sein müssen, daß sie auch bei langem Betrieb in Elastizität behalten, nicht reißen, zerrieben werden oder von einer meist winkelförmig abstehenden Haltelasche abgerissen werden. Diese Anforderungen an Gummiprofile, insbesondere Moosgummiprofile, machen es erforderlich, daß der Profilstrang über seinen ganzen Querschnitt und über seine ganze Länge gleichmäßig ausvulkanisiert ist und keine Stellen aufweist, an denen es durch zu starke örtlich Energiekonzentrationen zu Überhitzungen oder gar zu Verbrennungen gekommen ist.

Derart komplizierte Gummiprofile, insbesondere aus Moosgummi, lassen sich nurin einem weitgehend homogenen UHF-Energiefeld vulkanisieren. UHF-Energie ist elektromagnetische Energie, die im Bereich der Millimeterwellen Zentimeterwellen, Dezimeterwellen liegt. Diese Energie wird meist in Magnetrons erzeugt, durch Wellenleiter in Form von Hohlleitern runden oder rechteckigen Querschnitts in Resonatorkammern geleitet, in denen diese Energie auf das zu erwärmende und zu vulkanisierende Produkt einwirkt. Die Schwierigkeiten der Erwärmung mit UHF-Energie bestehen darin, eine geeignete, möglichst gleichmäßige Feldverteilung in der Resonatorkammer zu erreichen. Denn ungleichmäßige Energieverteilungen führen zu örtliche Überhitzungen oder gar Verbrennungen einer seits, zu geringfügigen Erwärmungen und damit zu unausvulkanisierten Stellen andererseits. Die gleichmäßige Feldverteilung ist sehr schwierig einstellbar. Denn wenn man mit Hilfe eine Meßsonde eine gleichmäßige Feldverteilung im Leerzustand der Resonatorkammer eingestellt hat, wird durch das polare zu erwärmende Produkt diese Feldverteilung gestört, und es tritt an ihre Stelle eine andere.

Bei Mikrowellenherden zur Erwärmung von Speisen treten diese Schwierigkeiten auch auf. Zu deren Minderung wurde bereits vorgeschlagen, einen Wellenleiter zu verzweigen und die Energie über zwei Schlitzstrahler, die um 90° gegeneinander in ihrer Richtung versetzt angeordnetsind, in die Resonatorkammer einzukoppeln. Das führt zu einer gewissen Verbesserung der Homogenität, weil nunmehr zwei senkrecht zueinander stehende Felder in der Resonatorkammer wirksam sind. Dieses mag für viele Fälle der Erwärmung von Speisen hinreichend sein. Denn Speisen sind immer wasserhaltig und durch den Gehalt an Wasser können Verbrennungen erst dann auftreten, wenn das Wasser vollständig verdampft ist. Das hingegen erfordert sehr erhebliche örtlich konzentriert Energiemengen, da für die Überführung von Wasser aus dem flüssigen Zustand in den gasförmigen Zustand erhebliche Wärmemengen notwendig sind. Anders ist es bei der Erwärmung von wasserfreien Erzeugnissen, zu denen die Kautschukerzeugnisse zählen. Hier ist die Gefahr des Auftretens von Verbrennungen an Stellen hoher Energiedichte sehr viel größer, weil hier nicht eine Verdampfungswärme schützend zur Verfügung steht.

Bei der bekannten Vorrichtung nach der US-A-3 564 187 befindet sich eine Vielzahl von Auskoppelstellen aus den beiden Zweigen de Wellenleiters in die Resonatorkammer bereits in unmittelbarer Nähe der Verzweigungsstelle. Das führt dazu, daß die als Abstimmvorrichtungen dienenden Kurzschlußschieber an den Enden der Zweige wohl eine Beeinflussung der Energiedichte und Energieverteilung in den Zweigen selbst vornehmen, jedoch auf die Energiedichte und Verteilung innerhalb der Resonatorkammer nur einen unwesentlichen Einfluß haben. Das führt zu einer schlechten Energieausnutzung.

Durch die FR-A-2 362 551 ist es bekanntgeworden, Abstimmvorrichtungen in Form einer drehbaren reflektierenden Scheibe und in Form eine bewegbaren reflektierenden Wand im Inneren der Resonatorkammer anzuordnen. Bei dieser bekannten Vorrichtung erfolgt die Energieeinspeisung nicht über eine Wellenleiterverzweigung, sondern über einen direkt in die Resonatorkammer führenden Wellenleiter, dessen Achse auf die verdrehbare Reflektorplatte gerichtet ist. Mit derartigen direkt in der Resonatorkammer angeordneten Reflektoren läßt sich die Energiedichte und Energieverteilung in der Resonatorkammer selbst beeinflussen. Diese Bauelemente machen es jedoch erforderlich, daß die Resonatorkammer größer dimensioniert werden muß als es ohne diese Bauelemente notwendig wäre. Die Verwendung eines drehbaren Reflektors führt in manchen Einstellungen dazu, daß zwar ein Maximum von Energie den Wellenleiter verläßt und ein Minimum von Energie in den Wellenleiter zurückreflektiert wird, was in den Wellenleiter durch eine besondere Vorrichtung gemessen wird, daß aber diese in die Resonatorkammer eingespeiste Energie vom Reflektor auch so geleitet werden kann, daß sie sich durch Vielfachreflexionen und Phasenauslöschung so im Inneren des Resonators verzehrt, daß das Produkt nur von einem Bruchteil der eingespeisten Energie erwärmt wird. Somit ist hier ein Möglichkeit einer durchaus schlechten Energienutzung gegeben.

Bei Erwärmungsvorrichtungen ist auch anderweitig die Energieverzweigung in Wellenleitern bekanntgeworden und benutzt, so z. B. in de GB-A-650 337. Für die Energieverzweigung werden auch Zirkulatoren benutzt, wie sie aus der GB-A-1 159 279 und der US-A-3 557 334 bekanntgeworden sind. Hier ist an dem einen Zweig de Zirkulators eine Last, z. B. in Form einer Wasserlast, zur Energievernichtung, vorgesehen.

Es ist die Aufgabe der Erfindung, bei einer Vorrichtung der eingangs genannten Art für die Erwärmung von Kautschukerzeugnissen zu Zwecke der Vulkanisation, eine Möglichkeit zur guten Energienutzung bei gleichmäßiger Feldverteilung zu schaffen.

Die Lösung dieser Aufgabe ist im Kennseichnenden Teil des Anspruchs 1 angegeben.

In dieser Anordnung wirkt die Abstimmvorrichtung nicht nur auf den einen Zweig, sondern sie wirkt gleichzeitig auch auf den andere Zweig. Diese Abstimmvorrichtung wirkt aber nicht nur auf die Wellenverteilung in den beiden Zweigen des Wellenleiters, sondern sie wirkt vor allem auch unmittelbar auf die Abstrahlungseigenschaften der Ankopplungsstellen ein. Somit hat sie zweierlei Funktion: Sie verändert die Wellenverteilung und damit die Reflexion in den Zweigen des Wellenleiters und die Abstrahlungs- bzw. Antenneneigenschaften der Ankopplungsstellen, z. B. Schlitzantennen. Das ermöglicht eine Herabsetzung der Reflexion auf einen möglichst geringen Anteil und eine für den jeweils zu erwärmenden Profilstrangtyp geeignete gleichmäßige Feldverteilung, woraus ein gleichmäßige Durchwärmung und damit eine gleichmäßige Vulkanisation des Profilstranges bei günstigster Energieausnutzung resultiert. Die Abstimmvorrichtung wirkt somit unmittelbar auf die Verhältnisse in der Resonatorkammer, ohne in der Resonatorkammer selbst Platz zu benötigen oder die Feldverteilung in der Resonatorkammer so ändern zu können, daß sich die Energie verzehrt, ohne das Produkt zu erwärmen.

Zweckmäßig ist es, wenn die Abstimmvorrichtung ein verschiebbarer Kurzschlußschieber ist. Die Länge der Verschiebungsstrecke eines solchen Kurzschlußschiebers ist gleich oder größer einem Viertel der benutzten Wellenlänge.

Ein besonders einfacher Aufbau mit einer besonders wirkungsvollen Ankopplung und Abstimmung läßt sich dann erreichen, wenn die Verzweigung T-förmig gestaltet ist und beide Zweige parallel zu einer Wandung der Resonatorkammer verlaufen.

Eine einwandfreie Messung der Abstimmung auf eine möglichst gute Energienutzung läßt sich dadurch erreichen, daß in dem angepaßte Absorptionszweig eines in dem Wellenleiter hinter dem UHF-Generator eingebauten Zirkulators eine Meßsonde angebracht wird. Der Zirkulator ist ein Bauteil der UHF-Technik, in das ein Wellenleiter Energie einführt, ein benachbart angeordneter Wellenleiter Energie auskoppelt und ein dritter Wellenleiter vorgesehen ist, in den aus dem Energie herausführenden Wellenleiter zurück in den Zirkulator gekoppelte Energie eingeleitet wird. Dieser dritte Wellenleiter wird mit einem angepaßten Widerstand versehen, um reflektierte Energie nicht in den Generator zurücktreten zu lassen. Das Wesen des Zirkulators besteht darin daß in ihm nur "Ein-Weg-Verbindungen" für die UHF-Energie vorhanden sind, derart, daß eingespeiste Energie immer in den benachbarten Hohlleiter einem bestimmten unveränderbaren Richtungssinn eingekoppelt wird.

Ein derartiger Zirkulator wird in den meisten mit UHF-Energie arbeitenden Vorrichtungen hinter dem UHF-Energie-Generator angeordnet, um zu vermeiden, daß Reflexionen bis zum Generator zurückgelangen können und auf den Generator einwirken können. Die vorliegende Erfindung nutzt einen solchen Zirkulator zur Messung der reflektierten Energie, indem Dämpfungszweig eine Meßsonde angeordnet ist, die bei geeigneter Abstimmung einen 0-Wert der reflektierten Energie mißt. Diese Meßsonde wird für eine automatisch arbeitende Abstimmvorrichtung benutzt, die aus einem Motor an der Abstimmvorrichtung und einem Steuergerät für den Motor besteht, das durch die Meßsonde im Dämpfungszweig des Zirkulators gesteuert ist. Diese automatisch arbeitende Abstimmvorrichtung weist aber zweckmäßigerweise noch eine von Hand zu betätigende Vorrichtung zur Verstimmung der vom Steuergerät eingestellten Abstimmung auf, weil es notwendig sein kann, in einer stärker homogenen Feldverteilung neben dem Maximum der Energienutzung zu arbeiten.

Vorteilhaft ist es, wenn die Resonatorkammer von jeweils einer weiteren Ankoppelstelle mit Energie gespeist wird. Dann wird die Aufheizenergie durch vier Ankoppelstellen in das aufzuheizende Material eingeleitet und vermag hier eine gleichmäßigere Temperaturverteilung zu erzeugen.

Das Wesen der Erfindung ist nachstehend anhand eines schematisch dargestellten Ausführungsbeispieles näher erläutert. Es zeigt

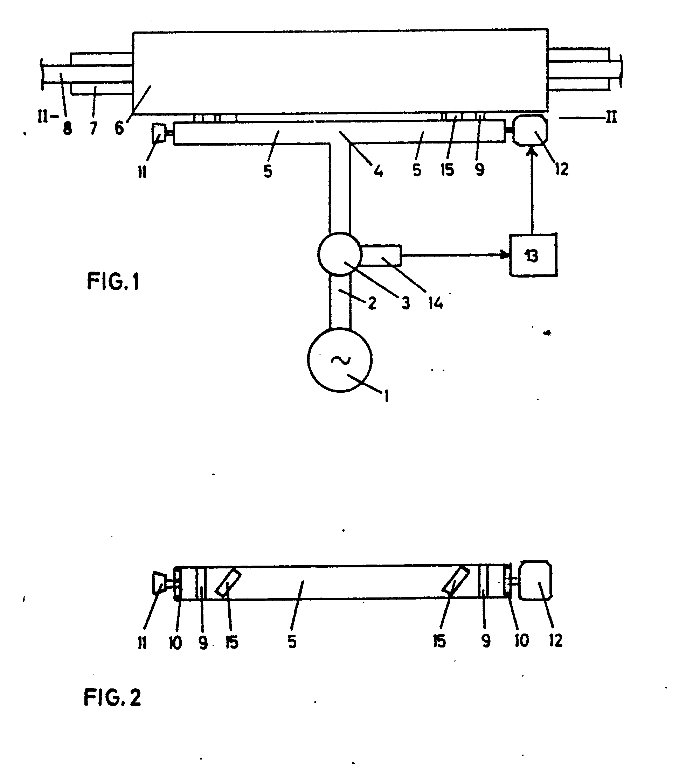

Fig. 1 eine blockschematische Ansicht der Vorrichtung.

Fig. 2 einen Schnitt längs der Linie II-II.

Im Mikrowellengenerator 1 wird UHF-Energie erzeugt, die über den Wellenleiter 2 und den in diesen eingeschalteten Zirkulator 3 an die Verzweigungsstelle 4 weitergeleitet wird. Die von hier abgehenden Zweige 5 verlaufen parallel zur Resonatorkammer 6, durch die ein Transportband 7 mit einem zu vulkanisierenden Profil 8 verläuft. Im Abstand von etwa einer halben Wellenlänge vom Ende jedes Zweiges ist eine Ankoppelstelle 9 vorgesehen, über die Energie aus jedem Zweig 5 in die Resonatorkammer 6 gekoppelt wird. Am Ende eines jeden Zweiges 5 befindet sich eine Abstimmvorrichtung 10, z. B. in Form eines Kurzschlußschiebers. Auf der linken Seite der Zeichnung ist eine Handabstimmvorrichtung in Form eines Handgriffes 11, auf der rechten Seite eine Abstimmvorrichtung mit einem Elektromotor 12 vorgesehen. Dieser Elektromotor wird in Betrieb gesetzt über ein Steuergerät 13, welches durch eine Meßsonde im Dämpfungszweig 14 des Zirkulators 3 gesteuert ist. Die Abstimmvorrichtungen 10 sind als Kurzschlußschieber ausgebildet. Es können weitere Auskopplungen vorgesehen werden. Neben den Ankopplungsstellen 9 sind weitere Ausführungsmöglichkeiten von Ankopplungsstellen 15 in jedem Zweig dargestellt.

Die im UHF-Generator 1 erzeugte Energie wird über den Wellenleiter 2 dem Zirkulator 3 zugeführt. Aus diesem gelangt die Energie zur Verzweigungsstelle 4 und in die Zweige 5. An deren Enden reflektierte Energie gelangt wieder um in den Zirkulator 3, und zwar in dessen Dämpfungszweig 14. Die in die Zweige 5 eingeleitete UHF-Energie wird über die Ankopplungsstellen 9, 15 in die Resonatorkammer 6 eingekoppelt, wo sie ein UHF-Feld bildet, das zur Erwärmung des Profilstranges 8 dient, der auf dem Förderband 7 durch die Resonatorkammer befördert wird. Eine jeweils günstigste Feldverteilung läßt sich durch Verschiebung der Kurzschlußschieber 10 einstellen. Dieses kan mittels des Handrades 11 von Hand geschehen oder motorisch über den Motor 12. Dieser wird von einem Steuergerät 13 in Tätigkeit gesetzt, und zwar solange, bis die Meßsonde im Dämpfungszweig 14 des Zirkulators 3 einen Minimalwert der in den Zirkulator reflektierten UHF-Energie anzeigt. Dann ist erreicht, daß ein Maximum an Energie in die Resonatorkammer 6 eingespeist wird. Damit ist abernicht zwangsläufig auch eine möglichst gleichmäßige Feldverteilung über den Querschnitt des aufzuheizenden Materials gewährleistet. Diese kann neben einem solchen Maximum liegen. Daher wird nach der automatischen Steuerung, gegebenenfalls von Hand mittels des Handrades 11, eine "Verstimmung" vorgenommen.

**Patentansprüche**

1. Vorrichtung zum Erwärmen von Kautschukerzeugnissen, insbesondere in Strangform, zum Zwecke der Vulkanisation mit UHF-Energie, bestehend aus mindestens einer Resonatorkammer (6), in der sich das zu erwärmende Produkt befindet, einem UHF-Generator (1) und einem von diesem zur Resonatorkammer (6) führenden Wellenleiter (2), der eine Verzweigung (4) aufweist, deren Zweige (5) jeweils an die Resonatorkammer (6) angekoppelt sind und an ihrem Ende jeweils eine Abstimmvorrichtung (10) aufweisen, dadurch gekennzeichnet, daß in jedem Zweig (5) eine oder zwei Ankopplungsstellen (9, 15) vorgesehen sind, daß unmittelbar neben der dem Ende des Zweigs (5) nächstgelegenen Ankopplungsstelle (9), und zwar zwischen dieser un dem Ende des Zweigs (5), die Abstimmvorrichtung (10) angeordnet ist und daß diese nächstgelegene Ankopplungsstelle (9) in einem Abstand von einem Viertel bis zur Hälfte der benutzten Wellenlänge vom Ende jedes Zweiges (5) angeordnet ist.

2. Vorrichtung nach Anspruch 1, dadurch gekennzeichnet daß die Abstimmvorrichtung (10) ein Kurzschlußschieber ist und daß die Länge seiner Verschiebungsstrecke gleich oder größer einem Viertel der benutzten Wellenlänge ist.

3. Vorrichtung nach Anspruch 1, gekennzeichnet durch eine automatisch arbeitende Abstimmvorrichtung, bestehend aus einem Motor (12) an der Abstimmvorrichtung (10), einem Zirkulator (3) im zur Wellenleiterverzweigung (4) führenden Wellenleiter (2) und einem Steuergerät (13) für den Motor (12), das an eine Meßsond im Dämpfungszweig (14) des Zirkulators (3) angeschlossen ist.

4. Vorrichtung nach Anspruch 3, gekennzeichnet durch eine von Hand zu betätigende Vorrichtung (11) zur Verstimmung der vom Steuergerät (13) eingestellten Abstimmung.

**Claims**

1. A heating device for vulkanizing rubber products, in particular in the form of strands, using UHF energy, consisting of at least one resonator chamber (6) which contains the product to be heated, a UHF generator (1) and a waveguide (2) which extends from the generator to the resonator chamber (6) and possesses a branch (4) whose arms (5) are respectively coupled to the resonator chamber (6) and have in each case a tuning device (10) at their ends, characterised in that in each arm (5) one or two coupling points (9, 15) are arranged; that the tuning device (10) is arranged directly beside the coupling point (9) nearest to the end of the arm (5), that is between said coupling point (9) and the end of the arm (5); and that this nearest coupling point (9) is spaced from the end of each arm (5) at a distance which is equal to a quarter to half of the operating wave-length.

2. A device as claimed in Claim 1, characterised in that the tuning device (10) is a short-circuit slide, and that the length of its displacement path is equal to or greater than a quarter of the operating wavelength.

3. A device as claimed in Claim 1, characterised by an automatically operating tuning device consisting of a motor (12) on the tuning device (10), a circulator (3) in the waveguide (2) leading to the waveguide branch (4), and a control apparatus (13) for the motor (12) which is connected to a measuring probe in the attenuation arm (14) of the circulator (3)

4. A device as claimed in Claim 3, characterised by a manually controlled device (11) for detuning the tuning set by the control apparatus (13).

**Revendications**

1. Dispositif pour chauffer des produits en caoutchouc, notamment sous forme de produits extrudés, en vue d'une vulcanisation à l'aide d'une énergie UHF, se composant d'au moins une cavité résonante (6) dans laquelle se trouve le produit à chauffer, d'un générateur UHF (1) et d'un guide d'ondes (2) reliant celui-ci à la cavité résonante (6) et qui comporte une dérivation (4) dont les branches (5) sont respectivement couplées avec la cavité résonante (6) et comportent à leur extrémité respective un dispositif d'accord (10), caractérisé en ce que une ou deux zones de couplage (9, 15) sont prévues dans chaque branche (5), que le dispositif d'accord (10) est prévu immédiatement à côté de la zone de couplage (9) la plus proche de l'extrémité de la branche (5) et entre cette zone de couplage et l'extrémité de la branche (5) et en ce que cette zone de couplage (9) la plus proche est disposée à une distance de l'extrémité de chaque branche (5) compris entre le quart et la moitié de la longueur d'onde guidée.

2. Dispositif selon la revendication 1, caractérisé en ce que le dispositif d'accord (10) est un curseur de court-circuit et en ce que la longueur de sa course de translation est égale ou supérieure à un quart de la longueur d'onde guidée

3. Dispositif selon la revendication 1, caractérisé en ce qu'il est prévu un dispositif d'accord fonctionnant automatiquement et se composant d'un moteur (12) relié au dispositif d'accord (10), d'un circulateur (3) placé dans le guide d'ondes (2) aboutissant à la dérivation de guide d'ondes (4) et d'un appareil de commande (13) du moteur (12), qui est relié à une sonde de mesur placée dans la branche d'amortissement (14) du circulateur (3).

4. Dispositif selon la revendication 3, caractérisé en ce qu'il est prévu un dispositif (11) manoeuvrable manuellement pour effectuer une modification de l'accord réglé par l'appareil de commande (13).

FIG. 1

FIG. 2